# EUROPÄISCHE PATENTANMELDUNG

(11) **EP 3 960 667 A1**
(43) Veröffentlichungstag der Anmeldung: **02.03.2022**
(21) Anmeldenummer: 20193870.1
(22) Anmeldetag: 01.09.2020
(51) Int. Cl.: B65G 47/86

(54) **GREIFEINRICHTUNG ZUM GREIFEN, HALTEN UND FÜHREN VON BEHÄLTERN UND TRANSPORTVORRICHTUNG MIT EINER DERARTIGEN GREIFEINRICHTUNG**

(71) Anmelder: Tyrolon-Schulnig GmbH, 6395 Hochfilzen (AT)
(72) Erfinder: Schulnig, Ludwig, 6392 St. Jakob in Haus (AT); Schulnig, Elmar, 6392 St. Jakob i.H. (AT); Mayer, Peter, 6395 Hochfilzen (AT)
(74) Vertreter: Rupprecht, Kay

(57) **Zusammenfassung**

Die vorliegende Erfindung betrifft eine Greifeinrichtung zum Greifen, Halten und Führen von Behältern, insbesondere von flaschenähnlichen Behältern, mit: mindestens einem Greifarmpaar 1 mit einem ersten Greifarm 2 sowie mit einem gegengleich ausgebildeten, zweiten Greifarm 2', wobei beide Greifarme 2, 2' jeweils eine Lagerbohrung 4, 4' aufweisen, mittels der sie schwenkbar lagerbar sind, und mit einem Schließmittel 13 (oder Öffnungsmittel) für das Greifarmpaar 1. Mit dem Ziel, einen zuverlässigen Öffnungsmechanismus bereitzustellen, weisen der erste Greifarm 2 einen Konturhebel 3 und der zweite Greifarm 2' einen Folgehebel 3' auf, die miteinander in Wirkeingriff stehen und als Öffnungsmittel (oder Schließmittel) für das Greifarmpaar 1 dienen.

## Beschreibung

Die Erfindung betrifft eine Greifeinrichtung zum Greifen, Halten und Führen von Behältern, insbesondere von flaschenähnlichen Behältern, sowie eine Transportvorrichtung mit einer derartigen Greifeinrichtung.

Greif- und Transportvorrichtungen zum Greifen, Halten und/oder Führen von Behältern sind bereits aus dem Stand der Technik bekannt, insbesondere unter dem Namen "Klammerstern". Sie werden vornehmlich bei der fließbandtechnischen Bearbeitung von Behältern bzw. Behältnissen verwendet, die insbesondere zur Befüllung mit Flüssigkeiten oder anderweitigem Schüttgut vorgesehen sind. Auch werden derartige Vorrichtungen in Etikettiermaschinen verwendet, mit denen ein Etikett, welches beispielsweise den Inhalt des Behälters ausweist, auf diesen aufgebracht wird, oder auch für Reinigungs- oder Spülstationen, sogenannte "Rinser".

Unter dem Begriff "Behälter" sind im Zusammenhang mit der vorliegenden Erfindung insbesondere, aber nicht ausschließlich kleine Behälter mit einem im Wesentlichen kreisförmigen Querschnitt zu verstehen, z. B. Flaschen oder Dosen oder Gläser, die jeweils den Gepflogenheiten entsprechend aus Glas, Metall oder Kunststoff bestehen können. Unter dem Begriff "Lagerelement" wird im Zusammenhang mit der vorliegenden Erfindung insbesondere, aber nicht ausschließlich ein insbesondere stiftförmiges Befestigungselement z.B. in Form von Lagerbolzen verstanden, welches rotierbar in eine zum jeweiligen Lagerelement passende Fassung passt.

Die Massenverarbeitung von derartigen Behältern bzw. Behältnissen macht ein häufiges Öffnen und Schließen des Greifarmpaares notwendig. Aus dem Stand der Technik sind hierfür Öffnungsmechanismen wie z.B. Steuernocken oder Schwenkwellen bekannt. Bei den Greifarmen ist eine Positionierungsvorrichtung bekannt, die jeweils an einem Greifarm in geeigneter Weise einen ersten und einen zweiten Verzahnungsabschnitt vorsieht, welche gegenseitig in Wirkeingriff stehen. Die Verzahnungsabschnitte unterstützen den Öffnungsmechanismus und haben sowohl die Funktion der Kraftübertragung, als auch eine Positionierungsfunktion, da sie die planare Ausrichtung und synchrone Bewegung der Greifarme zueinander sicherstellen.

Ein Problem des Stands der Technik besteht darin, dass die Verzahnungsabschnitte großen Kräften ausgesetzt sind und folglich schnell verschleißen. Dies ist darin begründet, dass die für das Öffnen bzw. Schließen des Greifarmpaares benötigte Kraft auf nur einen Greifarm direkt wirkt und über die Verzahnungsabschnitte an den zweiten Greifarm übertragen wird. Nicht nur führt ein Ausfall eines Verzahnungsabschnitts zu einem Stillstand einer Abfüllanlage; auch sind darüber hinaus hygienische Aspekte innerhalb der fließbandtechnischen Produktionslinie, insbesondere bei Abfüllung bzw. Weiterverarbeitung von Lebensmitteln oder dergleichen, zu berücksichtigen.

Der Erfindung liegt die Aufgabe zu Grunde, die aus dem Stand der Technik bekannten Probleme zu beseitigen oder zumindest zu minimieren. Insbesondere stellt sich die Aufgabe, den hohen Verschleiß der Verzahnungsabschnitte der Greifarme zu reduzieren.

Diese Aufgabe wird erfindungsgemäß durch eine Greifeinrichtung nach Anspruch 1 gelöst. Demnach ist eine Greifeinrichtung zum Greifen, Halten und Führen von Behältern, insbesondere von flaschenähnlichen Behältern, mit mindestens einem Greifarmpaar mit einem ersten Greifarm sowie mit einem gegengleich ausgebildeten, zweiten Greifarm, wobei beide Greifarme jeweils eine Lagerbohrung aufweisen, mittels der sie schwenkbar lagerbar sind, und mit einem Schließmittel für das Greifarmpaar. Mit dem Ziel, einen zuverlässigen Öffnungsmechanismus bereitzustellen, weisen der erste Greifarm einen Konturhebel und der zweite Greifarm einen Folgehebel auf, die miteinander in Wirkeingriff stehen und als Öffnungsmittel für das Greifarmpaar dienen.

Ein Vorteil einer derart ausgestalteten Einrichtung ist, dass durch den Konturhebel des ersten Greifarms eine kraftübertragende Verbindung zum Folgehebel des zweiten Greifarms hergestellt wird. Hierdurch wird eine externe Kraft, welche auf den Konturhebel direkt angreifen kann, direkt auf den Folgehebel übertragen. Dies hat zur Folge, dass das Greifarmpaar von einer geschlossenen in eine geöffnete Position gebracht wird. Durch die direkte Kraftübertragung wird nicht nur eine Schwenkbewegung des ersten Greifarms, sondern gleichzeitig auch eine Schwenkbewegung des zweiten Greifarms bewirkt. Hierdurch wird ein zuverlässigerer Öffnungsmechanismus bereitgestellt, der auch ohne Verzahnungsabschnitte verwendet werden kann. Auch dadurch, dass diese Hebel, auch als Wirkeingriffshebel bezeichnet, als Öffnungsmittel ausgebildet sind und somit dementsprechend geformt und strukturiert sind, führen die zu übertragenden Kräfte nicht zu einem vorzeitigen Verschleiß der Hebel. Schließlich wird die Ausfallwahrscheinlichkeit des Greifarmpaares reduziert bzw. die Betriebslebensdauer erhöht.

Die erfindungsgemäße Greifeinrichtung hat zusätzlich den Vorteil, dass diese aus wenigen Bauteilen besteht und bekannte Elemente wie Montageplatten, Steuernockenwelle und ähnliches entfallen.

Ein weiterer Vorteil der erfindungsgemäßen Greifeinrichtung, insbesondere des Konturhebels des ersten Greifarms und des Folgehebels des zweiten Greifarms, ist die geringere Materialabnutzung beim Betätigen und somit beim Öffnen der Greifeinrichtung im Vergleich zu einer mit einer Steuernockenwelle oder einer Schwenkwelle als Betätigungseinrichtung betriebenen Greifeinrichtung.

Alternativ können der Konturhebel und Folgehebel als Schließmittel und ein Magnetpaar oder Federelement als Öffnungsmittel ausgebildet sein. Das Magnetpaar ist in diesem Fall als abstoßendes Magnetpaar ausgebildet und zwischen Greifabschnitt und Lagerachse der Greifarme einer Greifeinrichtung angeordnet. Das Federelement ist als ein in der Greifstellung auseinanderrückendes Element, z.B. eine Spiralfeder, ausgebildet und zwischen Greifabschnitt und Lagerachse angeordnet.

Vorzugsweise sind der Konturhebel und der Folgehebel derart geformt, dass bei einem bestimmten Schwenkwinkel der Greifarme eine maximal große Berührungsfläche zwischen den beiden Hebeln vorliegt. Dadurch wird während eines Wirkeingriffs der beiden Hebel eine Kraft auf eine Fläche verteilt und führt nicht zu einer punktuellen Belastung bei einem der Hebel. Somit wird der materielle Verschleiß der Hebel reduziert. Bei dem bestimmten Winkel handelt es sich insbesondere um einen Öffnungswinkel, bei dem die Greifarme in der Öffnungsstellung für eine bestimmte Zeitdauer bereitstehen, um den nächsten Behälter zu greifen.

Es hat sich hierbei als vorteilhaft herausgestellt, wenn der Konturhebel einen Wirkabschnitt und der Folgehebel einen ersten Folgeabschnitt und insbesondere einen zweiten Folgeabschnitt aufweisen. Der erste Folgeabschnitt ist neben dem zweiten Folgeabschnitt ausgebildet und weist eine Berührungs- bzw. Kontaktfläche mit dem Wirkabschnitt auf, worüber die Schwenkbewegung des Konturhebels auf den Folgehebel übertragen wird. Diese Kontaktfläche verschiebt sich bei einer Schwenkbewegung der Greifarme, z.B. beim Öffnen der Greifarme, von dem ersten Folgeabschnitt in Richtung des Lagers des Greifarms (mit dem Folgehebel) zum zweiten Folgeabschnitt oder umgekehrt. Des Weiteren ist der zweite Folgeabschnitt zumindest teilweise komplementär zum Wirkabschnitt geformt und steht bei einem bestimmten Schwenkwinkel mindestens zum größten Teil bzw. mit einer größten Kontaktfläche mit diesem in Wirkeingriff. Durch die komplementäre Form wird eine durchgehende oder größte Berührungsfläche ermöglicht und somit eine Kraftübertragung vom Wirkabschnitt des Konturhebels auf den zweiten Folgeabschnitt des Folgehebels gleichmäßig verteilt. Somit wird eine punktuelle Belastung vermieden und ein stärkerer Verschleiß der Hebel reduziert.

Besonders einfache komplementäre Formen werden in einer weiteren vorteilhaften Ausführungsform verwendet, in der der Wirkabschnitt konvex, der erste Folgeabschnitt konvex und der zweite Folgeabschnitt konkav geformt sind. Hierbei sind insbesondere bogen- bzw. kreisförmige Abschnitte zu verstehen. Die Herstellung derartig geformter Abschnitte ist einfach und in kurzer Zeit möglich. Außerdem ist diese Form für die Hebel insbesondere bei der Führung entlang der Abschnitte von Vorteil, da die Kontaktfläche stetig größer werden können und zu keinen abrupten Bewegungen bzw. Sprüngen der Hebel und somit der Greifarme führen.

Um die Bewegung des Konturhebels und somit der Greifarme zu stoppen, weist der Konturhebel vorzugsweise einen Stoßabschnitt auf, der bei dem bestimmten oder einem zweiten Schwenkwinkel mit einer Außenseite des zweiten Greifarms, insbesondere dessen Hohlzylinder, in Wirkeingriff kommt bzw. dort anstößt und an einem Weiterschwenken gehindert wird. Da die Greifeinrichtungen in Transportvorrichtungen eingebaut werden, die sich mit einer hohen Bewegung rotieren und die Greifeinrichtungen genauso schnell ansteuern, kann das Schließmittel die Öffnungsbewegung der Greifarme des Öfteren nicht schnell genug abbremsen. Dies kann zu ungewollten Schwingungen führen, die einen Verschleiß der miteinander interagierenden Komponenten der Greifarme, wie z.B. der Hebel oder der Verzahnungsabschnitte, begünstigt.

Vorzugsweise ist der Stoßabschnitt des Konturhebels komplementär zu der Außenseite des zweiten Greifarms, insbesondere konkav, geformt. Dadurch stößt eine breite Fläche des Stoßabschnitts auf die Außenseite des Greifarms und führt zu einem schnelleren Stopp bzw. Halt der Öffnungsbewegung der Greifarme.

In einer weiteren vorteilhaften Ausführungsform weist der Konturhebel einen Betätigungsabschnitt auf, der dem Wirkabschnitt gegenüberliegt und eine Kraft zum Schwenken des ersten Greifarms aufnehmen kann. Aufgrund dieser Anordnung wird die Kraft eines Betätigungselements auf Betätigungsabschnitt des Konturhebels in eine Schwenkbewegung des Konturhebels umgewandelt. Diese Bewegung bzw. Kraft wird im Wesentlichen in die gleiche Richtung wie die Richtung der ursprünglichen Kraft, insbesondere mittels des Wirkabschnitts, auf den Folgehebel übertragen.

Vorteilhafterweise ist der Betätigungsabschnitt konvex geformt, um Kräfte aufzunehmen, die mit einer Richtung aus einem bestimmten Winkelbereich α auf den Betätigungsabschnitt wirken und zum Schwenken des ersten Greifarms führen. Ein verwendetes Betätigungselement zum Interagieren mit dem Betätigungsabschnitt (und somit zum Öffnen des Greifarmpaars) ist meist kreisbogenförmig und drückt durch seine Form gegen den Konturhebel der vorbeirotierenden Greifeinrichtung. Dabei ist der Rand des Betätigungselements meist in einem bestimmten Winkel bzw. Steigung ausgebildet, um den Hebel entlang des Betätigungselements zu führen. Aufgrund des Betätigungsabschnitts und insbesondere seiner Form sind verschiedene Steigungen des Betätigungselements und somit verschieden schnelle Öffnungsvorgänge des Greifarmpaars möglich.

Ebenso von Vorteil ist die Ausgestaltung des ersten und zweiten Greifarms mit jeweils einem Zahnrad- bzw. Verzahnungsabschnitt. Diese Abschnitte stehen miteinander in Wirkeingriff und führen dadurch in erster Linie zur Bewegungs- bzw. Positionssynchronisation der beiden Greifarme. Somit sind haben die Greifarme stets den gleichen Winkel zu einer Symmetrielinie, die gleichzeitig die Winkelhalbierende zwischen dem ersten und zweiten Greifarm ist. Zusätzlich dienen diese Abschnitte ähnlich dem Kontur- und dem Folgehebel der Kraftübertragung.

Zur optimalen Platzverteilung und Kraftübertragung zwischen den interagierenden Komponenten der Greifarme, sind die Zahnradabschnitte vorzugsweise entlang der Lagerbohrung unterhalb oder oberhalb des Kontur- bzw. Folgehebels ausgebildet.

Vorteilhafterweise sind ein oder mehrere Zähne der Zahnradabschnitte dünner als der Kontur- und/oder Folgehebel geformt. Dadurch wird Material eingespart, eine höhere Genauigkeit erzielt und die Komponenten entsprechend ihren Funktionen - Verzahnungsabschnitte zur Bewegungssynchronisation und Kontur- und Folgehebel zur Kraftübertragung - ausgebildet.

Die vorliegende Erfindung sieht ebenfalls eine Transportvorrichtung zum Transportieren von Behältern mit einem oder mehreren erfindungsgemäßen Greifeinrichtungen vor. Die Transportvorrichtung wird auch als "Klammerstern" bezeichnet und weist insbesondere eine Rotationsachse mit einer Trägerplatte vor, auf der die Greifeinrichtungen montiert sind.

Vorzugsweise ist die Trägerplatte ring- oder kreisförmig und derart ausgebildet, dass ein Positionieren und Befestigen der einen oder mehreren Greifeinrichtungen auf der Trägerplatte möglich ist.

In einer weiteren vorteilhaften Ausführungsform sind die Greifeinrichtungen mit einem bolzenförmigen und schwenkbaren Betätigungselement ausgestattet, das als Lagerelement verdrehsicher mit dem ersten Greifarm, insbesondere in dessen Lagerbohrung, verbunden ist und eine Betätigungsrolle zum Schwenken des Betätigungselements aufweist. Dadurch muss der Konturhebel nicht mehr direkt betätigt werden, sondern überträgt die durch das Betätigungselement initiierte Schwenkbewegung des ersten Greifarms direkt auf den Folgehebel und somit auf den zweiten Greifarm.

Alternativ kann ein kreisbogenförmiges Betätigungselement zum Betätigen des Konturhebels des ersten Greifarms der einen oder mehreren Greifeinrichtungen und somit zum Öffnen des Greifarmpaars vorgesehen sein. Dadurch ist nur ein Betätigungselement für alle Greifeinrichtungen notwendig, wodurch Material und Kosten gespart werden.

Die folgenden Merkmale wurden nicht in den Ansprüchen genannt, dienen der Klarstellung und können in weiteren vorteilhaften Ausführungsformen vorkommen:
Der Folgehebel wird durch einen zipfel- oder nasenförmigen Vorsprung, insbesondere von einer Außenseite des Hohlzylinders des zweiten Greifarms, gebildet. Diese Form ist besonders stabil und verteilt eine angreifende Kraft gleichmäßig auf die Außenseite des Greifarms, an der der Folgehebel ausgebildet bzw. befestigt ist.

Der zweite Schwenkwinkel für den Stoßabschnitt liegt vor oder nach dem ersten Winkel, bei dem die maximale Berührungsfläche zwischen den Hebeln erreicht wird. Hierbei ist es von Vorteil, wenn die Hebel derart geformt sind, dass die Berührungsfläche bis zu diesem ersten Winkel stetig wächst und/oder nach diesem Winkel fällt oder gleichbleibt.

In einer weiteren Ausführungsform weisen die Verzahnungsabschnitte zumindest segmentweise radial an der Hohlzylinderaußenseite angeordnete Zähne auf, zum Sicherstellen einer Positionierung der Greifarme zueinander. Durch diese an sich aus dem Stand der Technik bekannte Positionierungsvorrichtung werden die aus dem Stand der Technik bekannten Vorteile erzielt. Insbesondere wird eine exakte Positionierung der Greifarme zueinander sowie ein exakter Gleichlauf der Greifarme gewährleistet. Ein weiterer, wesentlicher Vorteil besteht darin, dass die Positionierungsvorrichtung aufgrund der vorliegenden Erfindung nur für die Positionierung verwendet wird und an sich keine Kraft überträgt, was die Lebensdauer dieser Vorrichtung wesentlich verlängert.

In funktioneller Hinsicht hat es sich als vorteilhaft erwiesen, wenn zwei gegenpolige Magnete als Schließmittel für das Greifarmpaar verwendet werden, zusätzlich oder alternativ zu einer Blattfeder. Der erste Magnet befindet sich auf der Greifarminnenseite des ersten Greifarms und der zweite Magnet, insbesondere positionsdeckend mit dem ersten Magneten, auf der Greifarminnenseite des zweiten Greifarms. Unter dem Begriff "positionsdeckend" wird im Zusammenhang mit der vorliegenden Erfindung insbesondere, aber nicht ausschließlich eine gegenüberliegende Lage zweier Bauteile verstanden, welche im Falle einer räumlichen Annäherung oder Berührung der Bauteile zu einer formschlüssigen Verbindung führt. An diesem Punkt wird darauf hingewiesen, dass zwei Magnete, abhängig von den sich zugewandten Polen und ihrer Anordnung gegenüber den Lagerachsen, als Schließmittel oder Öffnungsmittel verwendet werden können. Magnete als Schließmittel werden insbesondere bei der Handhabung von PET bzw. Kunststoff Flaschen bzw. Behältern verwendet, da diese im Vergleich zu Behältern aus Glass oder Metall weicher sind und durch Federelemente als Schließmittel beschädigt werden könnten.

In einer vorteilhaften Weiterbildung weist die Greifeinrichtung ein oder mehrere Federelemente als Kraftgeber auf, vorzugsweise eine Druckfeder, Blattfeder, Schenkelfeder, oder Zugfeder, wobei sich ein Ende des Federelements auf der Greifarminnenseite des ersten Greifarms und sich das zweite Ende des Federelements auf der Greifarminnenseite des zweiten Greifarms befindet. Durch die Verwendung von einer oder mehreren Federelementen, welche an sich aus dem Stand der Technik sind, werden die in Verbindung mit diesen Federelementen bekannten Vorteile erreicht. Federelemente als Schließmittel werden insbesondere bei der Handhabung von Flaschen bzw. Behältern mit Kronkorken und/oder aus Glass oder Metall verwendet. Kronkorken könnten von Magneten als Schließmittel angezogen werden und somit einen reibungsfreien Transport der Behälter beeinträchtigen. Außerdem können Federelemente, die oftmals stärkere Kräfte als Magnete aufbringen, derartige Behälter nicht beschädigen. Schlussendlich können je nach Ausbildung der Schließmittel als Magnet(paar) oder Federelement diese wartungsärmer, geringer anfällig gegenüber Verschmutzungen und/oder leichter zu reinigen sein.

Die Greifeinrichtung, insbesondere das Greifarmpaar, kann zusätzlich zwei Bolzen und eine Platte aufweisen. Hierbei sind die beiden Bolzen in den Lagerbohrungen des Greifarmpaars gelagert oder befestigt und selbst auf einer Trägerplatte oder einem extra Halteplattenstück befestigt oder drehbar gelagert. Die Bolzen können als Halte- bzw. Lagerelemente für das Greifarmpaar fungieren. Falls zumindest einer der Bolzen zusätzlich mit einem Betätigungshebel ausgestattet ist, kann der Bolzen den mit ihm befestigten Greifarm auch noch schwenken und somit das Greifarmpaar öffnen bzw. schließen.

Die Greifarme können aus verschiedenen Materialien, insbesondere aus einem Stück, hergestellt werden. So stehen verschieden Herstellungsverfahren wie Spritzgussverfahren für Kunststoff oder Sinterverfahren für Keramik oder Metall zur Verfügung. Ein aus Keramik hergestellter Greifarm weist vorzugsweise eine polierte Oberfläche auf und zeigt dadurch eine bessere chemische Beständigkeit und Reinigungseigenschaften.

In einer weiteren vorteilhaften Ausführungsform weist der Greifarm, insbesondere dessen Greifabschnitt, sogenannte Spikes auf, die aus dem gleichen Material wie der Greifarm ausgebildet ist bzw. Teil des Greifarms ist. Diese Spikes sind zumindest teilweise spitzen-, keil- und/oder hackenförmig und drücken sich beim Transport eines Behälters aus Kunststoff leicht in dessen Außenumfang/mantel und/oder von unten stirnseitig in den sogenannten Neckring des Behälters hinein. Die Eingriffe der Spikes sind minimal und führen zu keiner, zumindest keiner wesentlichen Beschädigung des Behälters. Dadurch wird insbesondere eine bessere Stabilität und Haltefähigkeit beim Greifen des Behälters bereitgestellt, wie dies bei manchen Prozessen z.B. beim Verschließen der Behälter notwendig ist.

Ebenso kann die Greifeinrichtung eine Stabilisierungs- und Führungselement aufweisen, dass derart ausgebildet ist, einen weiteren Stabilisierungspunkt/bereich neben dem Greifabschnitt der Greifeinrichtung bereitzustellen. Vorzugsweise wird der Flaschenbauch und/oder -boden durch das Element geführt. Das Führungselement ist passiv und befindet sich lediglich im Kontakt mit dem Behälter. Hierbei kann es als halbrunde oder irgendeine andere Form des Behälters ausgebildet sein, in die der Behälter angeordnet und geführt werden kann.

Die nachfolgend beschriebenen Figuren beziehen sich auf ein bevorzugtes Ausführungsbeispiel der erfindungsgemäßen Greifeinrichtung, wobei diese Figuren nicht als Einschränkung, sondern im Wesentlichen der Veranschaulichung der Erfindung dienen. Elemente aus unterschiedlichen Figuren, aber mit denselben Bezugszeichen sind identisch; daher ist die Beschreibung eines Elements aus einer Figur für gleichbezeichnete bzw. gleichnummerierte Elemente aus anderen Figuren auch gültig.

Es zeigen:
- Figur 1: Eine Ansicht von oben auf eine Greifeinrichtung gemäß einem ersten bevorzugten Ausführungsbeispiel;
- Figur 2: Eine Seitenansicht auf die Greifeinrichtung aus Figur 1;
- Figur 3: Eine Ansicht von unten auf die Greifeinrichtung aus Figur 1;
- Figur 4: Eine Ansicht von oben auf eine Greifeinrichtung gemäß einem zweiten bevorzugten Ausführungsbeispiel;
- Figur 5: Eine vergrößerte Ansicht von oben auf ein Öffnungsmittel einer Greifeinrichtung gemäß einem weiteren bevorzugten Ausführungsbeispiel;
- Figur 6: Eine Ansicht von oben auf eine Greifeinrichtung gemäß einem dritten bevorzugten Ausführungsbeispiel; und
- Figur 7: Eine Seitenansicht auf die Greifeinrichtung aus Figur 6.

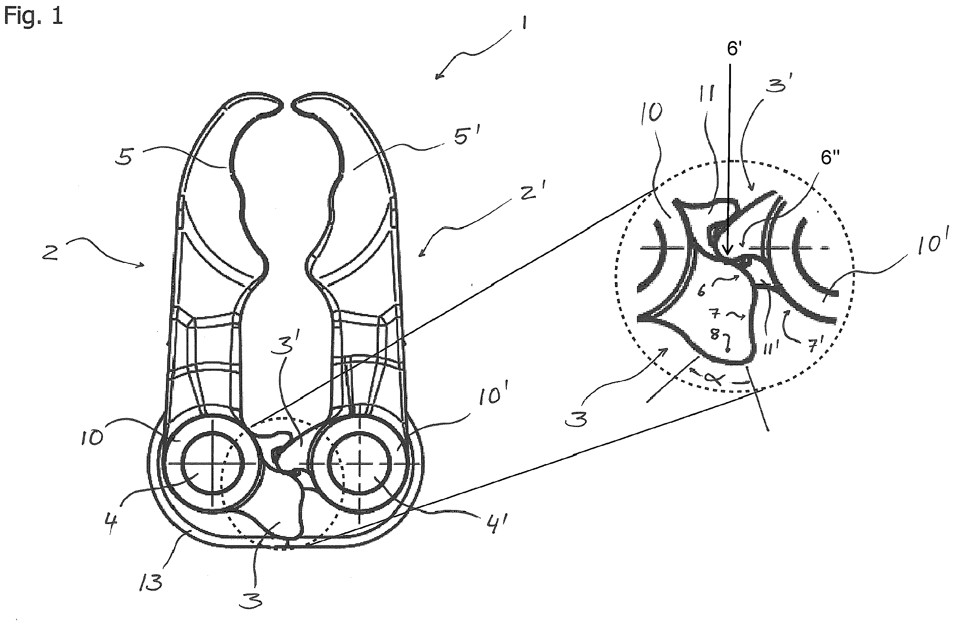

Die Figur 1 zeigt eine Ansicht von oben auf eine Greifeinrichtung gemäß einem bevorzugten Ausführungsbeispiel mit einem Greifarmpaar 1, welches zwei Greifarme 2, 2' aufweist. Beide Greifarme 2, 2' sind jeweils einteilig und durch einen Greifabschnitt 5, 5', einen Hohlzylinder 10, 10' (mit Lagerbohrung 4, 4'), einen Verzahnungsabschnitt 11, 11' als Teil einer Positionierungseinrichtung 9 und einen Wirkeingriffshebel 3, 3' als Teil eines Öffnungsmechanismus des Greifarmpaars 1 gekennzeichnet. Insbesondere stehen als Wirkeingriffshebel der Konturhebel 3 des ersten Greifarms 2 und der Folgehebel 3' des zweiten Greifarms 2' in Wirkeingriff zueinander. Das gleiche gilt für den ersten Verzahnungsabschnitt 11 und den zweiten Verzahnungsabschnitt 11'. Hierbei ist der erste Greifarm 2, bis auf den Verzahnungsabschnitt 11, 11' und den Wirkeingriffshebel 3, 3', im Wesentlichen gegengleich zum zweiten Greifarm 2' geformt. Der Greifabschnitt 5, 5' ist ausgebildet, einen Flaschenhals zu greifen und zu halten, und ist vom Hohlzylinder beabstandet angeordnet. Der Hohlzylinder 10, 10' bzw. die Lagerbohrung 4, 4' dient als Aufnahme für einen Lagerbolzen (nicht dargestellt), der je nach Öffnungsmechanismus in dem Hohlzylinder 10, 10' verdrehsicher oder schwenkbar eingesetzt ist. An einer Außenseite des Hohlzylinders ist der Verzahnungsabschnitt 11, 11' und den Wirkeingriffshebel 3, 3' ausgebildet. Auch der Greifabschnitt 5, 5' ist mit dem Hohlzylinder 10, 10' verbunden. Zusätzlich weist das Greifarmpaar 1 ein Schließmittel in Form einer Blattfeder 13 auf, dass das Greifarmpaar 1 wie eine Spange umgreift. Dabei wirkt die Blattfeder 13 eine Kraft auf die Außenseiten des Greifarmpaars 1 derart, dass das Greifarmpaar 1 geschlossen bzw. in eine Greifstellung geführt wird. Der Verzahnungsabschnitt 11, 11' ist unterhalb des Wirkeingriffshebels 3, 3' angeordnet. Die Hebel 3, 3' dienen in erster Linie der Kraftübertragung von dem ersten Greifarm 2 auf den zweiten Greifarm 2' und sind daher breiter als die Zähne der Verzahnungsabschnitte 11, 11' ausgebildet. Auf der rechten Seite der dargestellten Greifeinrichtung in Figur 1 ist eine Vergrößerung eines Bereichs zwischen den beiden Hohlzylindern 10, 10' dargestellt, um insbesondere die Details des Konturhebels 3 und des Folgehebels 3' besser zu kennzeichnen. Der Konturhebel 3 weist am Rand und nacheinander einen konvexen Wirkabschnitt 6, einen konkaven Stoßabschnitt 7 und einen konvexen Betätigungsabschnitt 8 auf. Der Folgehebel 3' ist mit einem ersten konvexen Folgeabschnitt 6' und einem zweiten konkaven Folgeabschnitt 6" ausgebildet, die mit dem Wirkabschnitt 6 in Wirkeingriff stehen oder treten können. Dabei bildet sich bei einem bestimmten ersten Schwenkwinkel der Greifarme 2, 2' eine maximal große Berührungs- bzw. Kontaktfläche zwischen dem Wirkabschnitt 6 und dem zweiten Folgeabschnitt 6". Bei einer Schwenkbewegung rollen der Wirkabschnitt 6 und der erste Folgeabschnitt 6' aufeinander ab. Beim gleichen oder bei einem zweiten Schwenkwinkel stößt der Stoßabschnitt 7 gegen eine Außenseite bzw. einen Bremsabschnitt 7' des zweiten Hohlzylinders 10' und stoppt dadurch eine weitere Bewegung des Konturhebels 3 und somit auch des Folgehebels 3'. Der Betätigungsabschnitt 8 ermöglicht es, dass ein kreisbogenförmiges Bestätigungselement (nicht dargestellt) gegen den Abschnitt 8 drückt und somit eine Schwenk- bzw. Öffnungsbewegung des Greifarmpaars 1 initiiert. Durch die konvexe Form des Betätigungsabschnitts 8 kann die Druckkraft des Betätigungselements von verschiedenen Richtungen kommen, weshalb das Betätigungselement zum Initiieren der Bewegung innerhalb dieses Winkels mit dem Abschnitt 8 als erstes in Kontakt kommen kann.

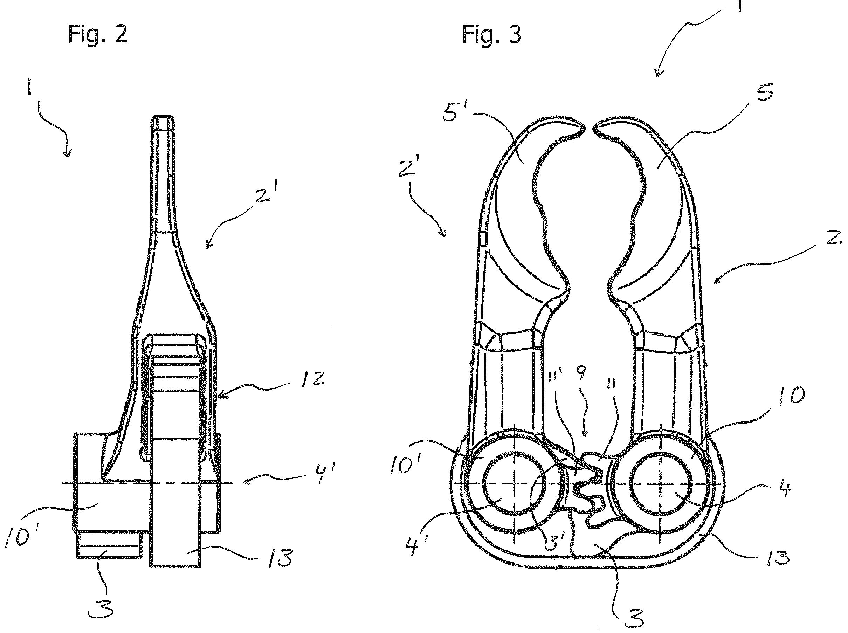

Figur 2 zeigt eine Seitenansicht auf die Greifeinrichtung aus Figur 1, insbesondere auf eine Außenseite des zweiten Greifarms 2' des Greifarmpaars 1. Wie beschrieben, umgreift die Blattfeder 13 das Greifarmpaar 1 und greift mit jeweils einem Ende in einer Ausnehmung bzw. Vertiefung 12 des ersten bzw. zweiten Greifarms. Damit das Greifarmpaar 1 durch ein Betätigungselement (nicht dargestellt) geöffnet werden kann, ist der Konturhebel 3 oberhalb der Blattfeder 13 angeordnet. Dadurch wird der Konturhebel 3 zur Rückseite des Greifarmpaars 1 - gegenüberliegend den Greifabschnitten 5, 5' - nicht verdeckt.

Figur 3 zeigt eine Ansicht von unten auf die Greifeinrichtung aus Figur 1, insbesondere auf das Greifarmpaar 1 mit dem ersten und zweiten Greifarm 2, 2'. Neben den zuvor in Figur 1 beschriebenen Merkmalen ist insbesondere die Positionierungseinrichtung 9 gut erkennbar. Die Positionierungseinrichtung 9 weist einen ersten Verzahnungsabschnitt 11 an der Außenseite des Hohlzylinders 10 des ersten Greifarms 2 und einen zweiten Verzahnungsabschnitt 11' an der Außenseite des Hohlzylinders 10' des zweiten Greifarms 2' auf. Der erste Verzahnungsabschnitt 11 ist mit drei Zähnen ausgebildet, während der zweite Verzahnungsabschnitt 11' mit zwei Zähnen ausgestattet ist. Diese stehen miteinander (verzahnt) im Eingriff und dienen in erster Linie der Synchronisierung der Schwenkbewegung bzw. des Bewegungsablaufs vom ersten und zweiten Greifarm 2, 2'.

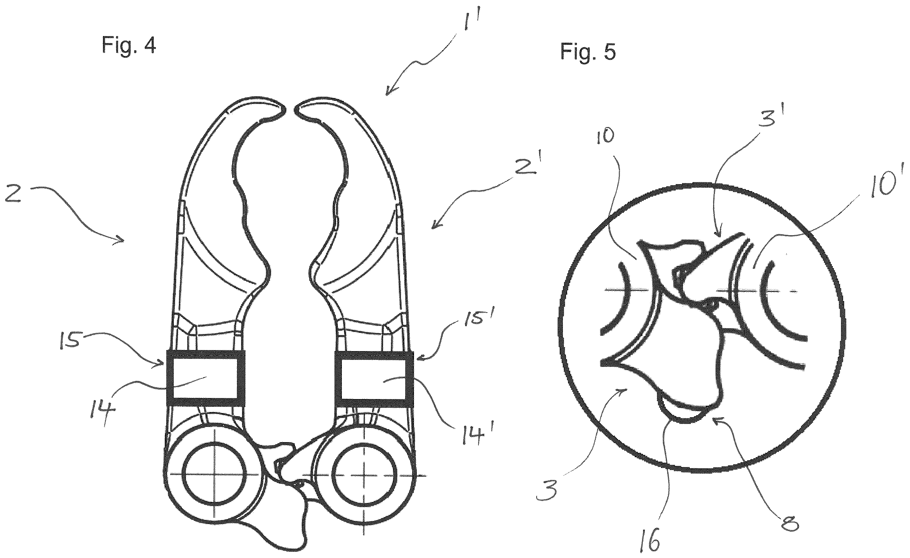

Figur 4 zeigt eine Ansicht von oben auf eine Greifeinrichtung mit einem Greifarmpaar 1' gemäß einem weiteren bevorzugten Ausführungsbeispiel. Diese Greifeinrichtung weist, bis auf die Sacklöcher 15, 15' mit Magnetelementen 14, 14' als Schließmittel, die gleichen Merkmale wie die Greifeinrichtung aus Fig. 1 auf. Das Sackloch 15, 15' erstreckt sich von der Außenseite eines Greifarms 2, 2' und ist senkrecht zur Lagerachse eines Greifarms ausgebildet. In dem Sackloch 15, 15' ist ein Magnetelement 14, 14', insbesondere in Form eines Permanentmagneten, eingebaut und z.B. durch Presspassung oder ein Befestigungselement befestigt. Die beiden Magnetelement 14, 14' sind entgegengesetzt zueinander gepolt, ziehen sich daher an und bilden somit das Schließmittel der Greifeinrichtung. Je nach Stärke und Abstand der Magnetelemente 14, 14' zueinander, wobei der Abstand unter anderem auch durch die Form, insbesondere die Tiefe des Sacklochs bedingt ist, kann die Stärke der Anziehung festgelegt werden.

Figur 5 zeigt eine vergrößerte Ansicht von oben auf ein Öffnungsmittel einer Greifeinrichtung gemäß einem bevorzugten Ausführungsbeispiel. Die Elemente aus dieser Ansicht sind identisch zu den Elementen aus der Vergrößerung des Öffnungsmittels von Fig. 1, rechts neben der Greifeinrichtung 1 dargestellt. Zusätzlich weist der Konturhebel 3 am Betätigungsabschnitt 8 ein Verstärkungselement 16 auf, das teilweise zylinderförmig an dem Betätigungsabschnitt 8 ausgebildet ist; d.h. dass das Verstärkungselement 16 eine Mantelfläche aufweist, die einem Zylinder entspricht, der teilweise aus dem Betätigungsabschnitt 8 hervortritt. Das Verstärkungselement 16 kann aus dem gleichen Material wie der Greifarm gebildet und/oder Teil des einstückigen Greifarms sein. Alternativ kann das Verstärkungselement 16 als Zylinder ausgebildet sein und in einem Hohlraum oder einer Aussparung im Bereich des Betätigungsabschnitts 8 des Konturhebels 3 eingesetzt und befestigt sein. Das Verstärkungselement 8 hat den Vorteil, den Verschleiß am Betätigungsabschnitt zusätzlich zu reduzieren und eine schärfere bzw. schneller reagierende Ansteuerung bereitzustellen.

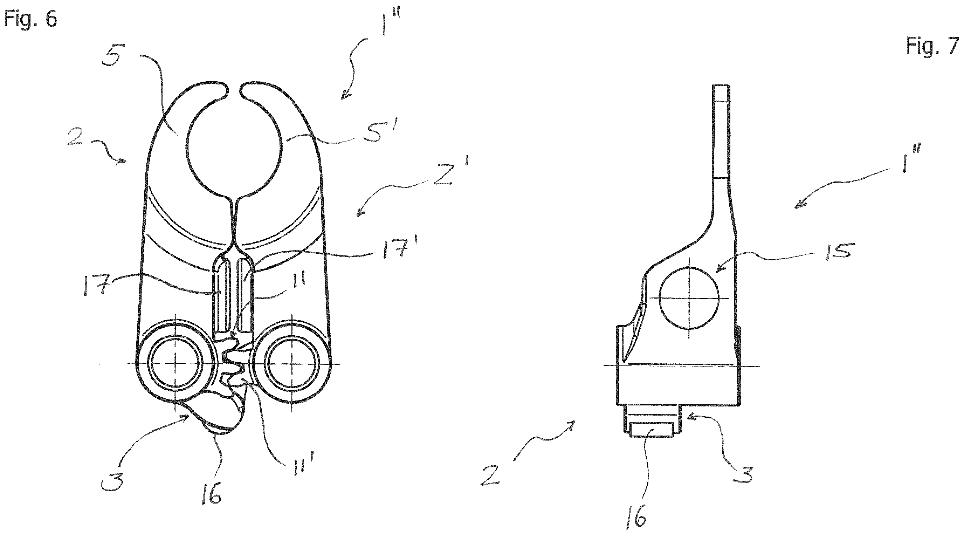

Figur 6 zeigt eine Ansicht von oben auf eine Greifeinrichtung mit einem Greifarmpaar 1" gemäß einem weiteren bevorzugten Ausführungsbeispiel. Das Greifarmpaar 1" weist einen ersten Greifarm 2 und einen zweiten Greifarm 2' auf, die zueinander schwenkbar sind. Damit die Bewegung synchron ablaufen kann, d.h. dass der erste Greifarm 2 und der zweite Greifarm 2' jeweils eine gleichgroße Schwenkbewegung zueinander hin oder voneinander weg ausführen, weisen die Greifarme 2 und 2' jeweils einen Zahnradabschnitt 11 und 11' auf, der um die Schwenkachse bzw. an der Außenseite des Hohlzylinders eines Greifarms 2 und 2' ausgebildet ist. Im Vergleich zum Greifarmpaar 1' aus Fig. 4 unterscheidet sich das hierin dargestellt Greifarmpaar 1" durch vollständig halbkreisförmige Greifabschnitte 5 und 5', einen breiteren Armfortsatz zwischen Hohlzylinder bzw. Bohrung und Greifabschnitt, sowie näher aneinander angeordnete Sacklöcher für die Magnete als Schließmittel bzw. Sacklochaußenseiten 17 und 17'. Des Weiteren sind unterhalb der Zahnradabschnitte 11 und 11' der Konturhebel 3 und der Folgehebel (nicht sichtbar) ausgebildet.

Figur 7 zeigt eine Seitenansicht auf die Greifeinrichtung mit einem Greifarmpaar 1" aus Fig. 6. Hierbei ist der erste Greifarm 2 mit dem Konturhebel 3 in erster Linie sichtbar. Der Konturhebel 3 weist das zylinderförmige Verstärkungssegment 16 auf, das vom Volumen hauptsächlich in dem Konturhebel 3 eingesetzt bzw. angeordnet ist. An der Außenseite des Greifarms 2, die nicht dem anderen Greifarm zugewandt ist, ist die Öffnung des Sacklochs 15 ausgebildet. Durch die Öffnung wird ein vorzugsweise zylinderförmiger Magnet eingesetzt, der mit dem anderen Magneten des anderen Greifarms als Schließmittel wirkt.

### Bezugszeichenliste

- 1: Greifarmpaar (1. Ausführungsbeispiel)
- 1': Greifarmpaar (2. Ausführungsbeispiel)
- 1": Greifarmpaar (3. Ausführungsbeispiel)
- 2: erster Greifarm
- 2': zweiter Greifarm
- 3: Konturhebel (als Öffnungsmittel)
- 3': Folgehebel (als Öffnungsmittel)
- 4: erste Lagerbohrung
- 4': zweite Lagerbohrung
- 5: Greifabschnitt (des ersten Greifarms)
- 5': Greifabschnitt (des zweiten Greifarms)
- 6: Wirkabschnitt
- 6': erster Folgeabschnitt (konvex)
- 6": zweiter Folgeabschnitt (konkav)
- 7: Stoßabschnitt
- 7': Bremsabschnitt
- 8: Betätigungsabschnitt
- 9: Positionierungs- bzw. Synchronisierungseinrichtung
- 10: Hohlzylinder (des ersten Greifarms) bzw. Bohrung
- 10': Hohlzylinder (des zweiten Greifarms) bzw. Bohrung
- 11: erster Verzahnungs- bzw. Zahnradabschnitt
- 11': zweiter Verzahnungs- bzw. Zahnradabschnitt
- 12: Ausnehmung/Vertiefung (für die Blattfeder)
- 13: Blattfeder (als Schließmittel)
- 14: Magnetelement (als Schließmittel) des ersten Greifarms
- 14': Magnetelement (als Schließmittel) des zweiten Greifarms
- 15: Sackloch des ersten Greifarms
- 15': Sackloch des zweiten Greifarms
- 16: Verstärkungssegment bzw. -element
- 17: Sacklochaußenseite des ersten Greifarms
- 17': Sacklochaußenseite des zweiten Greifarms

## Patentansprüche

1. Greifeinrichtung zum Greifen, Halten und Führen von Behältern, insbesondere von flaschenähnlichen Behältern, mit:
mindestens einem Greifarmpaar (1) mit einem ersten Greifarm (2) sowie mit einem gegengleich ausgebildeten, zweiten Greifarm (2'), wobei beide Greifarme (2; 2') jeweils eine Lagerbohrung (4; 4') aufweisen, mittels der sie schwenkbar lagerbar sind; und mit
einem Schließmittel (13) oder Öffnungsmittel für das Greifarmpaar (1);
**dadurch gekennzeichnet, dass**
der erste Greifarm (2) einen Konturhebel (3) und der zweite Greifarm (2') einen Folgehebel (3') aufweisen, die miteinander in Wirkeingriff stehen und als Öffnungsmittel oder Schließmittel für das Greifarmpaar (1) dienen.

2. Greifeinrichtung nach Anspruch 1,
**dadurch gekennzeichnet, dass**
der Konturhebel (3) und der Folgehebel (3') derart geformt sind, dass bei einem bestimmten Schwenkwinkel der Greifarme (2; 2') eine maximal große Berührungsfläche zwischen den beiden Hebeln vorliegt.

3. Greifeinrichtung nach Anspruch 1 oder 2,
**dadurch gekennzeichnet, dass**
der Konturhebel (3) einen Wirkabschnitt (6) und der Folgehebel (3') einen ersten Folgeabschnitt (6') aufweisen, wobei insbesondere der Wirkabschnitt (6) konvex und der erste Folgeabschnitt (6') konvex geformt sind.

4. Greifeinrichtung nach einem der Ansprüche 1 bis 3,
**dadurch gekennzeichnet, dass**
der Konturhebel (3) einen Stoßabschnitt (7) aufweist, der bei dem bestimmten Schwenkwinkel mit einem Bremsabschnitt (7') des zweiten Greifarms (2') in Wirkeingriff kommt bzw. dort anstößt, wodurch ein Weiterschwenken gestoppt wird.

5. Greifeinrichtung nach Anspruch 4,
**dadurch gekennzeichnet, dass**
der Stoßabschnitt (7) des Konturhebels (3) komplementär zum Bremsabschnitt (7') des zweiten Greifarms (2'), insbesondere konkav, geformt ist.

6. Greifeinrichtung nach einem der Ansprüche 1 bis 5,
**dadurch gekennzeichnet, dass**
der Konturhebel (3) einen Betätigungsabschnitt (8) aufweist, der dem Wirkabschnitt (6) gegenüberliegt und eine Kraft zum Schwenken des ersten Greifarms (2) aufnehmen kann.

7. Greifeinrichtung nach Anspruch 6,
**dadurch gekennzeichnet, dass**
der Betätigungsabschnitt (8) konvex geformt ist, um Kräfte aufzunehmen, die mit einer Richtung aus einem bestimmten Winkelbereich α auf den Betätigungsabschnitt (8) wirken und zum Schwenken des ersten Greifarms (2) führen.

8. Greifeinrichtung nach einem der Ansprüche 1 bis 7,
**dadurch gekennzeichnet, dass**
der erste und zweite Greifarm (2; 2') jeweils einen Verzahnungsabschnitt (11; 11') aufweisen, die zur Bewegungssynchronisation bzw. Positionierung der beiden Greifarme miteinander in Wirkeingriff stehen.

9. Greifeinrichtung nach Anspruch 8,
**dadurch gekennzeichnet, dass**
die Verzahnungsabschnitte (11; 11') entlang einer Außenseite eines Hohlzylinders (10; 10') der Greifarme und unterhalb oder oberhalb des Kontur- bzw. Folgehebels (3; 3') ausgebildet sind.

10. Greifeinrichtung nach Anspruch 8 oder 9,
**dadurch gekennzeichnet, dass**
ein oder mehrere Zähne der Verzahnungsabschnitte (11; 11') dünner als der Konturhebel (3) und der Folgehebel (3') geformt sind.

11. Greifeinrichtung nach einem der Ansprüche 1 bis 10,
**dadurch gekennzeichnet, dass**
das Schließmittel oder Öffnungsmittel als Blattfeder (13), andere Federarten und/oder als Magnetelementpaar (14, 14') ausgebildet ist.

12. Greifeinrichtung nach einem der Ansprüche 1 bis 11,
**dadurch gekennzeichnet, dass**
die Greifeinrichtung jeweils einen Lagerbolzen zum schwenkbaren Befestigen des jeweiligen Greifarms (2; 2) aufweist.

13. Transportvorrichtung zum Transportieren von Behältern mit einem oder mehreren Greifeinrichtungen nach einem der Ansprüche 1 bis 12,
**gekennzeichnet durch**
eine ringförmige Trägerplatte, die derart ausgebildet ist, dass ein Positionieren und Befestigen der einen oder mehreren Greifeinrichtungen auf der Trägerplatte möglich ist.

14. Transportvorrichtung nach Anspruch 12 und 13,
**gekennzeichnet durch**
ein bolzenförmiges und schwenkbares Betätigungselement, das als Lagerelement verdrehsicher mit dem ersten Greifarm, insbesondere in dessen Lagerbohrung, verbunden ist und eine Betätigungsrolle zum Schwenken des Betätigungselements aufweist.

15. Transportvorrichtung nach Anspruch 13,
**gekennzeichnet durch**
ein kreisbogenförmiges Betätigungselement zum Betätigen des Konturhebels (3) des ersten Greifarms (2) der einen oder mehreren Greifeinrichtungen und somit zum Öffnen oder Schließen des mindestens einen Greifarmpaars (1).
